# EUROPEAN PATENT APPLICATION

(11) **EP 4 779 786 A1**
(43) Date of publication of application: **22.07.2026**
(21) Application number: 24864299.3
(22) Date of filing: 30.07.2024
(51) Int. Cl.: H01M 50/489, H01M 50/443, H01M 50/457, H01M 50/446, H01M 50/403, H01M 10/0525

(54) **SEPARATOR, ELECTROCHEMICAL APPARATUS, AND ELECTRONIC DEVICE**

(30) Priority: 14.09.2023 CN 202311183703
(71) Applicant: Ningde Amperex Technology Limited, Ningde, Fujian 352100 (CN)
(72) Inventor: ZENG, Guanyin, Ningde City, Fujian Province 352100 (CN); FENG, Bo, Ningde City, Fujian Province 352100 (CN); CHEN, Minjing, Ningde City, Fujian Province 352100 (CN)
(74) Representative: Kraus & Lederer PartGmbB
(86) International application number: PCT/CN2024/108342
(87) International publication number: WO 2025/055576

(57) **Abstract**

A separator (101), an electrochemical apparatus, and an electronic device are provided. The separator (101) includes a base film (11) and a functional coating (12) disposed on the base film (11), where the functional coating (12) includes a first coating (121). The first coating (121) is disposed on one side surface of the base film (11), and the first coating (121) contains functional particles (13). The functional particles (13) are configured to melt and block pores of the base film during a thermal safety test. The separator (101) is configured in the electrochemical apparatus to improve the thermal safety performance of the electrochemical apparatus. The separator (101) does not melt to block pores during a formation stage, but can rapidly melt to block the pores of the base film during a high-temperature stage, thereby impeding short-circuit current between an anode and a cathode. When the separator (101) is configured in the electrochemical apparatus, the thermal safety performance of the electrochemical apparatus can be improved.

## Description

This application claims priority to Chinese Patent Application No. 2023111837038, filed on September 14, 2023 and entitled "SEPARATOR, ELECTROCHEMICAL APPARATUS, AND ELECTRONIC DEVICE", which is incorporated herein by reference in its entirety.

### TECHNICAL FIELD

This application relates to the field of battery technology, and in particular, to a separator, an electrochemical apparatus, and an electronic device.

### BACKGROUND

With the increasingly wide applications of lithium-ion batteries, higher requirements have been imposed on their safety performance, particularly their thermal safety performance. A battery separator with excellent thermal safety performance should have a low risk of thermal runaway, thereby preventing thermal runaway of a battery cell in the event of a short circuit or other abnormalities. Thermal runaway may ultimately lead to large-area short circuits in the battery, causing fire or explosion.

Currently, the pore closure design of a separator primarily focuses on the pore closure of a base film. The pore closure of the base film has been widely applied and verified to reduce the risk of thermal runaway. However, the performance of the base film needs to balance factors such as lowering the pore closure temperature, tensile strength of the separator, heat-shrinkage resistance, and processability. Consequently, the pore closure performance of the base film cannot be reduced indefinitely. Therefore, there is an urgent need to provide a separator that can further improve the pore closure performance of the base film to increase the pass rate of lithium-ion batteries in the hot-box test and the needle penetration test.

### SUMMARY

In view of this, this application provides a separator, an electrochemical apparatus, and an electronic device, where the separator does not melt to block pores during a high-temperature formation stage (80°C to 90°C) of a lithium-ion battery, but can rapidly melt to block pores of the base film during a high-temperature stage (110°C to 130°C) of thermal safety test, thereby impeding short-circuit current between an anode and a cathode. When the separator is configured in the electrochemical apparatus, the thermal safety performance of the electrochemical apparatus can be improved.

According to a first aspect, this application provides a separator. The separator includes a base film and a functional coating disposed on the base film, where the functional coating includes a first coating, the first coating is disposed on one side surface of the base film, the first coating contains functional particles, and the functional particles are configured to melt and block pores of the base film in a temperature range of 110°C to 130°C. The separator is configured in an electrochemical apparatus to improve the thermal safety performance of the electrochemical apparatus.

The functional particles exhibit a mass increase of 20% to 30% after soaked in a specific solution at a temperature of 98°C to 102°C for 1 h, where the specific solution includes a solvent and LiPF₆; the solvent includes ethylene carbonate, ethyl methyl carbonate, and diethyl carbonate; a mass ratio of ethylene carbonate, ethyl methyl carbonate, and diethyl carbonate is (0.8 to 1.2):(0.8 to 1.2):(0.8 to 1.2); and a mass percentage of LiPF₆ in the specific solution is 12wt% to 13wt%. In this case, the functional particles exhibit better pore-blocking performance at high temperatures, making it more conducive for the functional particles to melt and block the pores of the base film during the high-temperature stage of hot-box test.

In some embodiments, the base film is a base film with a low pore closure temperature. Preferably, a pore closure temperature of the base film with a low pore closure temperature is 134°C to 140°C. A pore closure temperature of an actual commercial base film typically does not reach 130°C. Therefore, in this application, the functional coating is further disposed on one side surface of the base film with a low pore closure temperature, enabling the base film with a low pore closure temperature to achieve pore closure of the base film in an environment below 130°C, thereby alleviating thermal runaway of a battery.

In some embodiments, the functional particles each have a core-shell structure, where the core-shell structure includes a core and a shell; the core contains a first component; the first component has a glass transition temperature/melting point of 30°C to 110°C, and the first component has an endothermic power of 1 mW/mg to 12 mW/mg; and the shell contains a second component; and the second component has a glass transition temperature/melting point of 110°C to 130°C.

On one hand, the functional particles in this application can remain stable during the high-temperature formation stage (80°C to 90°C) without affecting the normal charge and discharge of a battery cell. In addition, during the high-temperature stage (110°C to 130°C) of thermal safety test, the shell melts and ruptures, allowing a low-melting-point component (the first component) in the core to rapidly melt and flow to block the pores of the base film. Additionally, part of the melted material adheres to a surface of a cathode, inhibiting further side reactions between an electrolyte and the cathode, thereby improving thermal safety. On the other hand, the separator in this application significantly improves performance in the needle penetration test. During the needle penetration test, burrs from copper and aluminum foils caused by the piercing of a steel needle may lead to short circuits. The most dangerous short-circuit mode with a maximum heat generation amount refers to contact between an aluminum foil and an anode active material. Heat generated from an aluminum burr short circuit melts a pore closure coating (the first coating) of the separator, and the melted functional particles can isolate short-circuit points, thereby improving the needle penetration test.

In some embodiments, the first component is selected from at least one of polyethylene wax, low-molecular-weight polyvinyl chloride, polymethyl methacrylate, polybutyl methacrylate, polymethyl acrylate, terpolymer polyacrylonitrile, polystyrene, or polyester resin; the second component is selected from at least one of high-molecular-weight polyvinyl chloride, polyethylene, polyethylene naphthalate, or a mixture of polyethylene and polypropylene. The above materials are merely illustrative examples, and this application does not limit the selection of other materials, provided that their glass transition temperatures or melting points fall within the above ranges. In particular, for a melting point/glass transition temperature of a polymer, a molecular weight of the polymer can be controlled to allow the melting point/glass transition temperature of the polymer to fall within an appropriate range. Specific control methods may refer to conventional techniques in the prior art, which are not further described herein.

In some embodiments, the functional coating further includes a second coating, where the second coating is a solid filler coating; a porosity of the base film is 20% to 55%; and a porosity of the separator is 25% to 60%. After high-temperature formation of a battery cell containing the separator with the first coating and the second coating, the separator is disassembled, and its porosity is 25% to 50%, indicating that the first coating has little impact on the porosity of the separator after high-temperature formation. However, after the separator is baked at 115°C to 125°C for 1 h to 2 h, its porosity is only 5% to 30%, indicating that the melting and pore closure of the first coating significantly affects porosity after high-temperature baking. Preferably, the porosity of the base film is 30% to 55%, the porosity of the separator is 35% to 55%, and the porosity of the separator after baked at 115°C to 125°C for 1 h to 2 h is 5% to 22%. More preferably, the porosity of the base film is 30% to 40%, and the porosity of the separator after baked at 115°C to 125°C for 1 h to 2 h is 5% to 10%.

In some embodiments, a Gurley permeability tester is used, an increase in an air permeability value of a fresh separator (relative to a separator without the first coating and containing only the solid filler coating) is 20 s/100 cc to 120 s/100 cc; an increase in an air permeability value of a separator extracted from a fresh battery cell is (80 to 300) s/100 cc; and an increase in an air permeability value of the separator after baked at 115°C to 125°C for 20 min to 30 min is (800 to 10000) s/100 cc. This indicates that the separator in this application exhibits a small increase in the air permeability value at room temperature, and the separator extracted from the fresh battery cell exhibits a small increase in the air permeability value, but the separator after baked at high temperatures exhibits a significant increase in the air permeability value. In this application, the fresh separator refers to a separator with both surfaces coated, and the fresh battery cell refers to a battery cell obtained by winding a positive electrode plate, a negative electrode plate, and a separator in sequence, placing the resulting stack in an outer packaging foil, making an electrolyte injection opening exposed, filling the electrolyte through the electrolyte injection opening, and then sealing.

In some embodiments, a melting range of the functional particles is 5°C to 25°C; a D50 value of the functional particles is 0.4 µm to 2 µm; and the D50 value of the functional particles is denoted as D₁, and a D50 value of the core is denoted as D₂, satisfying: 0.5 ≤ D₂/D₁ ≤ 1. Preferably, 0.5 ≤ D₂/D₁ ≤ 0.7. Preferably, the melting range of the functional particles is 10°C to 15°C.

In some embodiments, the separator is configured in an electrochemical apparatus; and in a fully charged state, a DSC spectrum of the separator exhibits a characteristic peak A1 of the core in a range of 95°C to 110°C and a characteristic peak B1 of the shell in a range of 115°C to 135°C, where a peak area of a main melting peak of the characteristic peak A1 is 150 J/g to 200 J/g, and a peak area of a main melting peak of the characteristic peak B1 is 150 J/g to 200 J/g.

According to a second aspect, this application provides an electrochemical apparatus, where the electrochemical apparatus includes a separator and an electrolyte; the separator is the above separator; the electrolyte includes an organic solvent and an additive; the organic solvent includes a linear carbonate and a cyclic carbonate; the additive includes a nitrile compound; and the nitrile compound is selected from at least one of succinonitrile, adiponitrile, glutaronitrile, or acrylonitrile. In this application, the above separator is combined with an appropriate electrolyte, the pore closure performance of the separator can be better improved, further improving thermal safety. A full charge voltage of the electrochemical apparatus is 4.45 V to 4.5 V

In some embodiments, a mass ratio of the organic solvent to the additive is (3 to 5):(0.1 to 0.2).

In some embodiments, based on a mass of the organic solvent, a mass percentage of the linear carbonate is 15wt% to 40wt%, and a mass percentage of the cyclic carbonate is 60wt% to 85wt%. The percentage of the linear carbonate should not be less than 15%. When the percentage of the linear carbonate is less than 15%, the solvent system has a high viscosity, reducing overall conductivity and affecting electrical performance. An upper limit of the percentage of the linear carbonate should not exceed 40%. An excessively high percentage of the linear carbonate causes the solvent to be prone to boiling and flash explosion during safety test. When the mass percentages of the linear carbonate and the cyclic carbonate are within the above ranges, they facilitate synergistic compatibility with the separator and can better cooperate a melted material to block the pores of the base film.

In some embodiments, based on a mass of the additive, a mass percentage of the nitrile compound is 0.15wt% to 0.5wt%. In this case, an appropriate amount of the nitrile compound facilitates film formation on a cathode, enhancing the stability of the cathode at high temperatures, preventing heat generation from side reactions between the cathode and the electrolyte, and further improving thermal safety.

In some embodiments, the functional particles exhibit a mass increase of 5% to 15% after soaked in the electrolyte at 75°C to 85°C for 1 h. After a low-melting-point material in the core flows out, the swelling degree in the electrolyte environment increases with temperature. This feature helps the low-melting-point material further swell to block the pores.

In some embodiments, an ohmic internal resistance of the electrochemical apparatus is denoted as R, a voltage range of the electrochemical apparatus in a fully discharged state is 3.0 V to 3.5 V, and an ohmic internal resistance after baked at 115°C to 125°C for 20 min to 30 min is (1.2 to 5.0)R. This feature is used to indicate the increase in separator impedance after the pores are blocked by the functional particles.

According to a third aspect, this application provides an electronic device, where the electronic device includes the above electrochemical apparatus.

This application provides a separator, an electrochemical apparatus, and an electronic device, where the separator includes functional particles; the functional particles each have a core-shell structure; and a glass transition temperature/melting point of a shell material is significantly higher than a glass transition temperature/melting point of a core material. The functional particles can remain stable during a formation stage of a battery, without affecting the normal charge and discharge of a battery cell. In addition, during a the high-temperature testing stage, the shell material can rapidly melt and rupture, allowing a first material in a core to rapidly melt and flow to block pores of a base film, thereby impeding short-circuit current between an anode and a cathode. Additionally, part of the melted material adheres to a surface of the cathode, inhibiting further side reactions between an electrolyte and the cathode, thereby improving thermal safety. Moreover, the separator in this application significantly improves performance in the needle penetration test. During the needle penetration test, burrs from copper and aluminum foils caused by the piercing of a steel needle may lead to short circuits. The most dangerous short-circuit mode with a maximum heat generation amount refers to contact between an aluminum foil and an anode active material. Heat generated from an aluminum burr short circuit melts a pore closure coating (a first coating), and the melted functional particles can isolate short-circuit points, thereby improving the needle penetration test.

### BRIEF DESCRIPTION OF DRAWINGS

To more clearly illustrate the technical solutions in some embodiments of this application or the prior art, the drawings required for the description of these embodiments or the prior art are briefly described below. Apparently, the drawings described below are only some embodiments of this application, and those skilled in the art can obtain other drawings based on these drawings without creative effort.
FIG. 1 is a schematic structural diagram of a separator in this application;
FIG. 2 is a DSC test spectrum of a separator in Example 1-1 of this application;
FIG. 3 is a coating morphology of the separator in Example 1-1 of this application after coating completion;
FIG. 4 is a coating morphology of the separator in Example 1-1 of this application after high-temperature formation;
FIG. 5 is a coating morphology of the separator in Example 1-1 of this application after thermal safety test;
FIG. 6 is a coating morphology of the separator in Example 1-9 of this application after melting and pore-blocking at a high temperature;
FIG. 7 is a needle penetration effect diagram of the separator in Example 1-9 of this application on a battery cell passing a needle penetration test; and
FIG. 8 is a needle penetration effect diagram of the separator in Comparative Example 1-1 of this application on a battery cell passing a needle penetration test.

### DESCRIPTION OF EMBODIMENTS

To make the objectives, technical solutions, and advantages of this application clearer, this application is further described in detail below in conjunction with the drawings and some embodiments. It should be understood that the specific embodiments described herein are merely used to explain this application and are not intended to limit this application.

The pore closure design of a separator significantly improves thermal safety. Under the limitation of a low pore closure temperature of a base film, this application proposes to design a coating with a pore closure function in a coating to further improve the overall pore closure performance of the separator. The pore closure design can close channels of the separator, preventing ion conduction between positive and negative electrodes, inhibiting material exchange between the positive electrodes, preventing a reducing material on a negative electrode side from reaching the positive electrode, and preventing an oxidizing material on a positive electrode side from reaching the negative electrode, thereby reducing heat from side reactions inside a battery. Additionally, the coating is also conducive to increasing a pass rate of battery cells in the needle penetration test.

Currently, the issues caused when a pore closure coating is used are as follows: first, the pore closure coating melts and blocks pores after formation and hot-pressing, leading to high impedance; second, a slow pore closure response speed at high temperatures (incapability of achieving rapid pore closure in a timely manner) results in rapid thermal runaway of a battery cell. A common method to address the above common issues include increasing the Tg (melting point temperature) of a material to prevent the material from melting during processing (especially during high-temperature formation at 80°C to 90°C), which can mitigate melting and pore-blocking after formation to some extent. However, as the melting point temperature increases, rapid pore closure is difficultly achieved in a temperature zone requiring rapid pore closure at high temperatures (110°C to 130°C), leading to poor improvement in thermal safety.

To address the above technical issues, this application provides a separator, where the separator does not melt to block pores during a high-temperature formation stage (80°C to 90°C), but can rapidly melt to block pores of a base film during a high-temperature stage (110°C to 130°C), thereby impeding short-circuit current between an anode and a cathode. When the separator is configured in an electrochemical apparatus, the thermal safety performance of the electrochemical apparatus can be improved.

### Electrochemical apparatus

This application provides an electrochemical apparatus. The electrochemical apparatus includes a positive electrode plate, a negative electrode plate, a separator, and an electrolyte, where the separator is disposed between the positive electrode plate and the negative electrode plate.

### Separator

The separator 101 includes a base film 11 and a functional coating 12 disposed on the base film 11. The functional coating 12 includes a first coating 121. The first coating 121 is disposed on one side surface of the base film 11, and the first coating 121 contains functional particles 13. The functional particles 13 are configured to melt and block pores of the base film during a thermal safety test. The separator 101 is configured in an electrochemical apparatus to improve the thermal safety performance of the electrochemical apparatus.

In some embodiments, the functional particles 13 each have a core-shell structure, where the core-shell structure includes a core 131 and a shell 132. The core 131 contains a first component. The first component has a glass transition temperature/melting point of 30°C to 110°C, and the first component has an endothermic power of 1 mW/mg to 12 mW/mg. The shell 132 contains a second component. The second component has a glass transition temperature/melting point of 110°C to 130°C. Preferably, the endothermic power of the first component is 8 mW/mg to 12 mW/mg.

For example, the glass transition temperature/melting point of the first component is 30°C, 40°C, 50°C, 60°C, 70°C, 80°C, 90°C, 100°C, 110°C, or a range defined by any two of the above values.

For example, the endothermic power of the first component is 1 mW/mg, 3 mW/mg, 5 mW/mg, 6 mW/mg, 8 mW/mg, 10 mW/mg, 12 mW/mg, or a range defined by any two of the above values.

For example, the glass transition temperature/melting point of the second component is 110°C, 115°C, 120°C, 125°C, 130°C, or a range defined by any two of the above values.

In some embodiments, the functional coating 12 further includes a second coating 122, where the second coating 122 is a solid filler coating. A porosity of the base film 11 is 20% to 55%, a porosity of the separator 101 is 25% to 60%, and the porosity of the separator 101 after baked at 115°C to 125°C for 1 h to 2 h is 5% to 30%. Preferably, the porosity of the base film is 30% to 55%, the porosity of the separator is 35% to 55%, and the porosity of the separator after baked at 115°C to 125°C for 1 h to 2 h is 5% to 22%.

For example, the porosity of the base film 11 is 20%, 25%, 30%, 35%, 40%, 45%, 50%, 55%, or a range defined by any two of the above values.

For example, the porosity of the separator 101 is 25%, 35%, 45%, 50%, 55%, 60%, or a range defined by any two of the above values.

For example, the porosity of the separator 101 after baked at 115°C to 125°C for 1 h to 2 h is 5%, 8%, 10%, 13%, 15%, 18%, 20%, 22%, 25%, 28%, 30%, or a range defined by any two of the above values.

In some embodiments, a melting range of the functional particles is 5°C to 25°C, and a D50 value of the functional particles is 0.4 µm to 2 µm.

For example, the melting range of the functional particles is 5°C, 8°C, 10°C, 13°C, 15°C, 18°C, 20°C, 23°C, 25°C, or a range defined by any two of the above values.

For example, the D50 value of the functional particles is 0.4 µm, 0.5 µm, 0.6 µm, 0.8 µm, 1 µm, 1.2 µm, 1.4 µm, 1.5 µm, 1.6 µm, 1.8 µm, 2 µm, or a range defined by any two of the above values.

In some embodiments, the D50 value of the functional particles is denoted as D₁, and a D50 value of the core is denoted as D₂, satisfying: 0.5 ≤ D₂/D₁ ≤ 1.

For example, the D₂/D₁ value is 0.5, 0.6, 0.7, 0.8, 0.9, 1, or a range defined by any two of the above values.

In some embodiments, the separator is configured in the electrochemical apparatus; and in a fully charged state, a DSC spectrum of the separator exhibits a characteristic peak A1 of the core in a range of 95°C to 110°C and a characteristic peak B1 of the shell in a range of 115°C to 135°C. A peak area of a main melting peak of the characteristic peak A1 is 150 J/g to 200 J/g, and a peak area of a main melting peak of the characteristic peak B1 is 150 J/g to 200 J/g.

For example, the peak area of the main melting peak of the characteristic peak A1 is 150 J/g, 160 J/g, 170 J/g, 180 J/g, 190 J/g, 200 J/g, or a range defined by any two of the above values.

For example, the peak area of the main melting peak of the characteristic peak B1 is 150 J/g, 160 J/g, 170 J/g, 180 J/g, 190 J/g, 200 J/g, or a range defined by any two of the above values.

### Exemplary preparation method of separator:

### (1) Preparation of functional particles:

For example: A reaction solution containing a raw linear liquid is obtained; the reaction solution and a catalyst are added to a hydrogenation reactor and stirred at 55°C to 65°C with a rotation speed of 550 r/min to 650 r/min for 10 min to 20 min; an emulsifier is added, then a hydrogen gas is filled to raise a pressure of a pressure gauge to 1 MPa to 1.5 MPa; the rotation speed is adjusted to 750 r/min to 850 r/min for a reaction for 3 h to 4 h; after the reaction is completed, the pressure is released and the temperature is maintained for 1 h to 2 h; and then a shell monomer and an appropriate amount of cross-linking agent are added, followed by stirring, maintaining the temperature for 2 h to 3 h, cooling to room temperature, and performing freeze demulsification, to obtain functional particles.

### (2) Preparation of first coating:

For example: Step a. Deionized water, functional particles, a binder, and a wetting agent are mixed, where the functional particles, the binder, and the wetting agent are mixed at a mass ratio of (96.5 to 99.3)%:(0.5 to 3)%:(0.2 to 0.5)% (without a dispersion medium deionized water), and the resulting mixture is fully dispersed evenly in a stirrer to obtain a coating slurry A to be applied. Step b. The coating slurry A to be applied from step a is evenly applied onto one side surface of a base film, followed by drying to prepare a first coating.

### (3) Preparation of second coating:

For example: Step c. Deionized water, a solid filler, a binder, and a wetting agent are mixed, where the solid filler, the binder, and the wetting agent are mixed at a mass ratio of (94.5 to 99.3)%:(0.5 to 5)%:(0.2 to 0.5)%, and the resulting mixture is fully dispersed evenly in a stirrer to obtain a coating slurry B to be applied. Step d. The coating slurry B to be applied from step c is evenly applied onto another side surface of the base film, followed by drying to obtain a second coating, thereby obtaining the separator.

### Electrolyte

The electrolyte includes an organic solvent and an additive, where the organic solvent includes a linear carbonate and a cyclic carbonate; the additive includes a nitrile compound; and the nitrile compound is selected from at least one of succinonitrile, adiponitrile, glutaronitrile, or acrylonitrile.

In some embodiments, a mass ratio of the organic solvent to the additive is (3 to 5):(0.1 to 0.2).

In some embodiments, based on a mass of the organic solvent, a mass percentage of the linear carbonate is 15wt% to 40wt%, and a mass percentage of the cyclic carbonate is 60wt% to 85wt%.

For example, the mass percentage of the linear carbonate is 15wt%, 16wt%, 17wt%, 18wt%, 19wt%, 20wt%, 25wt%, 30wt%, 35wt%, 40wt%, or a range defined by any two of the above values.

For example, the mass percentage of the cyclic carbonate is 60wt%, 65wt%, 70wt%, 75wt%, 80wt%, 85wt%, or a range defined by any two of the above values.

In some embodiments, based on a mass of the additive, a mass percentage of the nitrile compound is 0.15wt% to 0.5wt%.

For example, based on the mass of the additive, the mass percentage of the nitrile compound is 0.15wt%, 0.2wt%, 0.25wt%, 0.3wt%, 0.35wt%, 0.4wt%, 0.45wt%, 0.5wt%, or a range defined by any two of the above values.

In some embodiments, the functional particles exhibit a mass increase of 5% to 15% after soaked in the electrolyte at 75°C to 85°C for 1 h.

For example, the mass increase of the functional particles after soaked in the electrolyte at 75°C to 85°C for 1 h is 5%, 8%, 10%, 13%, 15%, or a range defined by any two of the above values.

The electrolyte can be prepared according to conventional methods in the art.

### Other

A cathode electrode plate includes a cathode current collector and a cathode active material layer disposed on at least one surface of the cathode current collector. This application does not particularly limit the thickness of the cathode active material layer, provided that the objectives of this application can be achieved. For example, the thickness of the cathode active material layer is 30 µm to 120 µm. A cathode active material in the cathode active material layer may be selected from one or more of lithium cobalt oxide, lithium nickel oxide, lithium manganese oxide, lithium nickel manganese oxide, lithium nickel cobalt manganese oxide, lithium nickel cobalt aluminum oxide, lithium iron phosphate, and compounds obtained by adding other transition metals or non-transition metals to the above compounds. The cathode current collector may use materials such as metal foils or porous metal plates. For example, foils or porous plates of metals such as aluminum, copper, nickel, titanium, or iron, or alloys thereof, such as Al (aluminum) foil, are used. This application does not particularly limit the thickness of the cathode current collector, provided that the objectives of this application can be achieved. For example, the thickness of the cathode current collector is 5 µm to 12 µm.

In some embodiments, a specific capacity of the cathode active material is 175 mAh/g to 185 mAh/g, and a specific capacity of the cathode active material after baked at 115°C to 125°C for 1 h to 2 h is 40 mAh/g to 120 mAh/g.

For example, the specific capacity of the cathode active material is 175 mAh/g, 178 mAh/g, 180 mAh/g, 183 mAh/g, 185 mAh/g, or a range defined by any two of the above values.

For example, the specific capacity of the cathode active material after baked at 115°C to 125°C for 1 h to 2 h is 40 mAh/g, 60 mAh/g, 80 mAh/g, 100 mAh/g, 120 mAh/g, or a range defined by any two of the above values.

The cathode electrode plate can be prepared according to conventional methods in the art.

An anode electrode plate includes an anode current collector and an anode active material layer disposed on at least one surface of the anode current collector. This application does not particularly limit the thickness of the anode active material layer, provided that the objectives of this application can be achieved. For example, the thickness of the anode active material layer is 30 µm to 120 µm. The anode active material layer contains an anode active material. In some embodiments, the anode active material may include at least one of a carbon material or a silicon-based material. In some embodiments, the carbon material includes, but is not limited to, at least one of natural graphite, artificial graphite, mesocarbon microbeads, hard carbon, or soft carbon. In some embodiments, the silicon-based material includes, but is not limited to, at least one of silicon, a silicon-oxygen composite material, or a silicon-carbon composite material. This application does not particularly limit the anode current collector, provided that the objectives of this application can be achieved. For example, the anode current collector may include copper foil, copper alloy foil, nickel foil, stainless steel foil, titanium foil, foamed nickel, foamed copper, or a composite current collector (for example, a composite current collector with a metal layer on a surface of a polymer layer). This application does not particularly limit the thickness of the anode current collector, provided that the objectives of this application can be achieved. For example, the thickness of the anode current collector is 5 µm to 12 µm. The anode active layer may further include a binder and a thickener. This application does not particularly limit the types of the binder and the thickener, provided that the objectives of this application can be achieved. For example, the binder may include, but is not limited to, at least one of polyvinyl alcohol, polyvinyl chloride, carboxylated polyvinyl chloride, polyvinyl fluoride, polyvinylpyrrolidone, polyurethane, polytetrafluoroethylene, polyvinylidene fluoride, styrene-butadiene rubber, or acrylic (ester)-modified styrene-butadiene rubber. The thickener may include, but is not limited to, at least one of sodium carboxymethyl cellulose or lithium carboxymethyl cellulose. The anode active layer may further include a conductive agent. This application does not particularly limit the type of the conductive agent, provided that the objectives of this application can be achieved. For example, the conductive agent may include, but is not limited to, at least one of conductive carbon black, carbon nanotubes (CNTs), carbon fiber, acetylene black, graphene, a metal material, or a conductive polymer. This application does not particularly limit the mass ratio of the negative electrode active material, the conductive agent, the binder, and the thickener in the anode active layer, and those skilled in the art may select according to actual needs, provided that the objectives of this application can be achieved. Optionally, the anode electrode plate may further include a conductive layer, where the conductive layer is located between the anode current collector and the anode active layer. This application does not particularly limit the composition of the conductive layer, and the conductive layer may be a conductive layer commonly used in the art. For example, the conductive layer includes a conductive agent and a binder. This application does not particularly limit the conductive agent and the binder in the conductive layer. For example, the conductive agent and the binder may be at least one of the conductive agents and the binders in the above negative electrode active layer.

The anode electrode plate can be prepared according to conventional methods in the art.

The electrochemical apparatus of this application may include any apparatus that undergoes an electrochemical reaction, and its specific examples include all types of primary batteries or secondary batteries. In particular, the electrochemical apparatus is a lithium secondary battery, including a lithium metal secondary battery, a lithium-ion secondary battery, a lithium polymer secondary battery, or a lithium-ion polymer secondary battery.

### Electronic device

The electronic device in this application includes any of the above electrochemical apparatuses. The electronic device of this application includes, but is not limited to, a mobile phone, a laptop computer, a tablet computer, a gaming console, a drone, an electric vehicle, an electric bicycle, an electric tool, and a Bluetooth headset.

The following describes some embodiments of this application more specifically by giving examples and comparative examples.

### Example 1-1

### (I) Preparation of lithium-ion battery

### (1) Preparation of lithium-ion battery separator

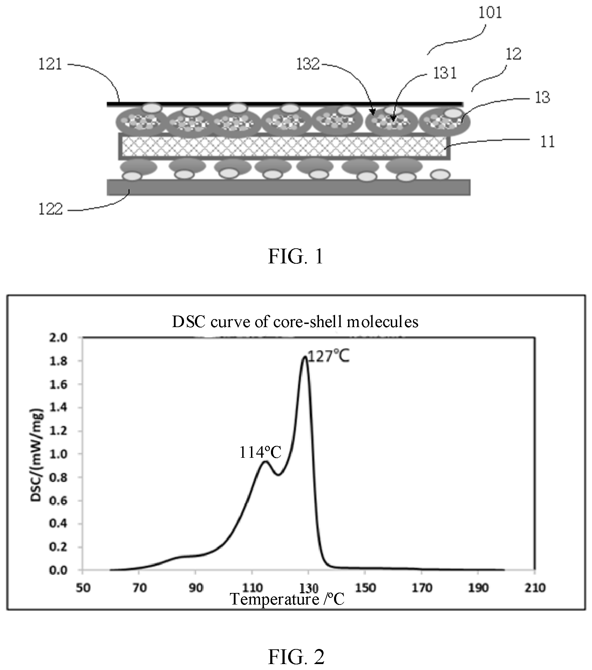

A base film with a pore closure temperature of 135°C was used; and one surface of the base film was coated with a slurry A, followed by drying to prepare a first coating; and another surface of the base film was coated with a slurry B, followed by drying to prepare a second coating, thereby obtaining the separator. A structural schematic diagram of the separator is shown in FIG. 1, and a DSC spectrum of the separator is shown in FIG. 2. From FIG. 2, it can be seen that a main melting peak of a core component is at 114°C, and a main melting peak of a shell component is at 127°C.

The coating slurry A and the coating slurry B were prepared in the following method.

### Preparation of functional particles:

A 10% solution was prepared from a raw linear liquid polyethylene wax (with a melting point of 105°C) and added to a 2 L hydrogenation reactor with a rotor, where a mass of the solution was 1200 g. The reactor was sealed to prevent air leakage, then flushed with high-purity nitrogen three times to remove air inside the reactor. A catalyst was prepared from triisobutylaluminum and nickel naphthenate at a molar ratio of 6:1. The prepared catalyst was placed in a constant-temperature water bath for 30 minutes and then slowly filled into the reactor for stirring at 60°C with a rotation speed of 600 r/min for 15 min. 200 g of an emulsifier sodium carboxymethyl cellulose was added. A hydrogen gas was filled to raise a pressure of a pressure gauge to 1 MPa. Then, reaction was performed at a rotation speed of 800 r/min for 3 h. The pressure was released after the reaction was completed. The temperature was maintained for 1 h. Then, a shell monomer vinyl chloride was added, where an addition amount of the shell monomer accounted for 11% of a core mass. An appropriate amount of a cross-linking agent acrylate substance was added, where an addition amount of the cross-linking agent accounted for 0.5% of the core mass. Slow stirring was performed at 300 r/min and the temperature was maintained for 2 h. Finally, the resulting product was cooled to room temperature, followed by freeze demulsification to obtain functional particles with core-shell structures. The prepared functional particles exhibited a mass increase of 23% after soaked in a specific solution at 100°C for 1 h, where the specific solution includes a solvent and LiPF₆. The solvent included ethylene carbonate, ethyl methyl carbonate, and diethyl carbonate, where a mass ratio of ethylene carbonate, ethyl methyl carbonate, and diethyl carbonate was 1:1:1, and a mass percentage of LiPF₆ in the specific solution was 12.5wt%.

### Preparation of coating slurry A:

Deionized water, the functional particles, PVDF, and polyoxyethylene alkylphenol ether were mixed, where the functional particles, PVDF, and polyoxyethylene alkylphenol ether were mixed at a mass ratio of 98%:2%:0.3% (without a dispersion medium deionized water). The resulting mixture was fully dispersed evenly in a stirrer to obtain a slurry A to be applied.

### Preparation of coating slurry B:

Deionized water, boehmite, PVA, and polyoxyethylene alkylphenol ether were mixed, where boehmite, PVA, and polyoxyethylene alkylphenol ether were mixed at a mass ratio of 99%:0.5%:0.5%. The resulting mixture was fully dispersed evenly in a stirrer to obtain a coating slurry B to be applied.

Comparative Example 1-1 was the same as Example 1-1 except that in Comparative Example 1-1, both sides of the base film were coated with ceramic particle coatings. To be specific, when the coating slurry A was prepared in Comparative Example 1-1, the functional particles were replaced with boehmite.

Comparative Examples 1-2 and 1-3 were the same as Example 1 except that in Comparative Examples 1-2 and 1-3, various parameters of the first component in the core and the second component in the shell of the functional particles were adjusted respectively, with details shown in Table 2.

Examples 1-2 to 1-15 were the same as Example 1-1 except that in Examples 1-2 to 1-15, various parameters of the first component in the core and the second component in the shell of the functional particles were adjusted respectively. In particular, for polymers with similar melting points, for example, polyethylene with a melting point of 110°C as the second component in Example 1-9 and polyethylene with a melting point of 115°C as the second component in Example 1-10, although their molecular weight ranges were the same, the melting point difference could be achieved through fine adjustment of the percentage of macromolecules, with specific parameters shown in Table 2.

In Examples 2-1 to 2-14, the D50 value of the functional particles, the melting range of the functional particles, and the porosity of the base film were further adjusted, with details shown in Table 3.

### (2) Preparation of cathode electrode plate

A cathode active material lithium cobalt oxide LiCoO₂, conductive carbon black Super-P, and a binder PVDF were added to an N-methylpyrrolidone (NMP) solvent system at a weight ratio of 97.6:1.3:1.1, and stirred fully using a vacuum mixer to obtain a cathode slurry. The cathode slurry was applied on both surfaces of a 9 µm Al foil substrate with a coating weight of 280 mg, followed by sequentially drying, cold pressing, slitting, and cutting to obtain a positive electrode plate, where the thickness of the positive electrode plate after cold pressing was 95 µm.

### (3) Preparation of anode electrode plate

An anode active material artificial graphite, a conductive agent acetylene black, a binder styrene-butadiene rubber (SBR), and a thickener sodium carboxymethyl cellulose (CMC) were mixed evenly in a deionized water solvent at a mass ratio of 95:2:2:1. The resulting mixture was applied on one side surface of a 9 µm Cu foil, and then drying was performed. The above steps are repeated on another side surface of the Cu foil to obtain an anode electrode plate having double surfaces coated with the anode active layer, followed by cold pressing and cutting to obtain a negative electrode plate.

### (4) Preparation of electrolyte

Ethylene carbonate (EC), ethyl methyl carbonate (EMC), and diethyl carbonate (DEC) were mixed evenly at a mass ratio of 1:1:1 to obtain an organic solvent. LiPF₆ was dissolved in the above organic solvent. Then, vinylene carbonate (additive) was added and mixed evenly to obtain an electrolyte. Based on a total mass of the electrolyte, a mass percentage of LiPF₆ was 12.5%, and a mass percentage of vinylene carbonate was 3%.

In Examples 3-1 to 3-8, the components and percentages of the components in the organic solvent in the electrolyte were further adjusted, with details shown in Table 4.

### (5) Preparation of lithium-ion battery

The cathode electrode plate, the separator, and the anode electrode plate were stacked in sequence, such that the separator separated the cathode electrode plate and the anode electrode plate. The resulting stack was wound to form a jelly roll. The jelly roll was placed in an aluminum-plastic film shell to be sealed, followed by processes such as high-temperature baking, electrolyte injection, vacuum sealing, standing, formation, shaping, and capacity testing, to obtain a lithium-ion battery.

In Examples 4-1 to 4-5, an open-circuit voltage (referred to a voltage of the lithium-ion battery in a fully discharged state) and a specific capacity of the cathode active material of the prepared lithium-ion battery were further adjusted, with details shown in Table 5.

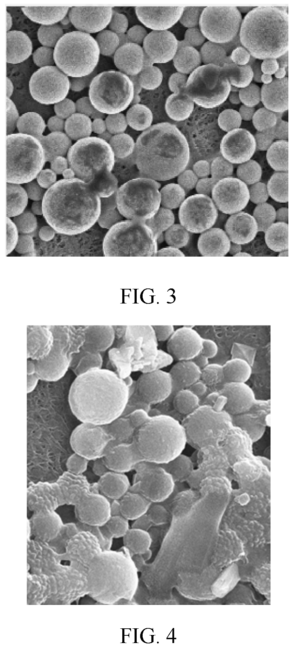

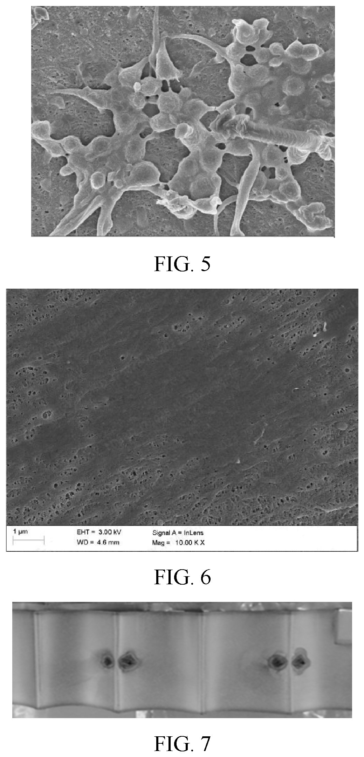

FIG. 3 is a coating morphology of the separator in Example 1-1 of this application after coating completion, FIG. 4 is a coating morphology of the separator in Example 1-1 of this application after high-temperature formation, and FIG. 5 is a coating morphology of the separator in Example 1-1 of this application after thermal safety test. From combination of FIG. 3 to FIG. 5, it can be seen that the separator in this application can rapidly melt to block the pores of the base film during the high-temperature stage.

FIG. 6 is a coating morphology of the separator in Example 1-9 of this application after melting and pore-blocking at a high temperature. From FIG. 6, it can be seen that a melted low-melting-point material flows and adheres to burrs, isolating short-circuit points, and reducing the short-circuit area, thereby increasing the pass rate in the needle penetration test.

### (II) Test of lithium-ion battery

### (1) Thermal safety test

### (a) Hot-box test

Step 1: The prepared battery was charged at a constant current of 0.5C to a cutoff voltage of 4.5 V, then charged at constant voltage to a cutoff current of 200 mA, and then let standing for 5 minutes.

Step 2: A temperature sensing cable was attached on a position between two tabs of the fully charged battery, the two tabs were connected to monitor the voltage, and the battery cell was vertically suspended in a box.

Step 3: The box was heated to 130°C at a temperature rise speed of 5°C and then maintained for 60 min.

Evaluation criterion: The battery passed if no fire or no explosion occurred.

### (b) Needle penetration test

A 4 mm steel needle was used, and a penetration speed was 30 mm/s, lithium-ion batteries prepared in Comparative Example 1-1 and Example 1-9 were subjected to needle penetration test under the conditions listed in Table 1.

**Table 1**

| Group | Initial voltage (V) | Voltage after test (V) | Fire |
|---|---|---|---|
| Comparative Example 1-1 | 4.4354 | 0 | Yes |
| | 4.43583 | 0 | Yes |
| | 4.43576 | 0 | Yes |
| | 4.43598 | 4.2409 | No |
| | 4.43604 | 0 | Yes |
| Example 1-9 | 4.43516 | 4.34503 | No |
| | 4.4351 | 4.34824 | No |
| | 4.43445 | 4.37797 | No |
| | 4.43443 | 4.33646 | No |
| | 4.4344 | 4.3436 | No |

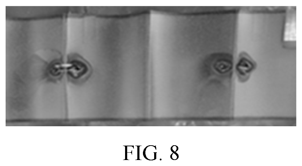

FIG. 7 is a needle penetration effect diagram of the separator in Example 1-9 of this application on a battery cell passing a needle penetration test, and FIG. 8 is a needle penetration effect diagram of the separator in Comparative Example 1-1 of this application on a battery cell passing a needle penetration test. From comparison of FIG. 7 and FIG. 8, it can be seen that the burn area and burn degree of the short-circuit region of the electrode plate using the pore closure coating in Example 1-9 are smaller than those in a contrast group.

### (2) Cathode heat generation test

The battery cell was fully charged (charged at 0.2C to 4.5 V and then charged at a constant voltage of 4.5 V to 0.05C). Then, the battery cell was disassembled, and the cathode electrode plate was taken and tested in an adiabatic calorimeter.

### (3) Test of battery cell internal resistance

After formation, the battery cell had a voltage in a range of 3.8 V to 4.2 V, and was left standing at a high temperature of 45°C ± 5°C for 24 h ± 3 h and then left standing at the room temperature of 25°C for 24 h ± 3 h. An internal resistance tester was used and connected to the positive and negative electrode tabs of the battery cell to test the internal resistance of the battery cell.

### (4) Swelling test

The functional particles were soaked in a specific solution at 100°C for 1 h, and then a mass increase was calculated. The specific solution includes a solvent and LiPF₆, where the solvent includes ethylene carbonate, ethyl methyl carbonate, and diethyl carbonate. A mass ratio of ethylene carbonate, ethyl methyl carbonate, and diethyl carbonate was 1:1:1. A mass percentage of LiPF₆ in the specific solution was 12.5wt%.

**Table 2**

| | Functional particle | | | | | Mass increase of swelling test (%) | Thermal safety test | | Internal resistance of battery cell |
|---|---|---|---|---|---|---|---|---|---|
| | Core | | | Shell | | | | | |
| | First component | Melting point of first component (°C) | Endothermic power of first component (mW/mg) | Second component | Melting point of second component (°C) | | Pass rate in hot-box test at 130°C (%) | Pass rate in needle penetration test (%) | Internal resistance of battery cell after formation (mΩ) |
| Comparative . Example 1-1 | / | / | / | / | / | / | 0/5 | 1/5 | 30.0 |
| Comparative Example 1-2 | Polyethylene wax (with molecular weight of 4000-6000) | 120 | 0.8 | Polyethylene (with molecular weight of 6000-10000) | 130 | 10 | 1/5 | 1/5 | 16.3 |
| Comparative Example 1-3 | Polyethylene wax (with molecular weight of 1000-1500) | 20 | 13 | Polyethylene (with molecular weight of 6000-10000) | 130 | 40 | 1/5 | 1/5 | 27.0 |
| Example 1-1 | Polyethylene wax (with molecular weight of 1000-3000) | 105 | 6.5 | Polyvinyl chloride (with molecular weight of 5* 10⁴-6* 10⁴) | 120 | 23 | *515* | 5/5 | 18.6 |
| Examplel-2 | Polyethylene wax (with molecular weight of 1000-2500) | 40 | 8 | Polyvinyl chloride (with molecular weight of 5*10⁴-6*10⁴) | 120 | 23 | 5/5 | 5/5 | 20 |
| Example 1-3 | Polyethylene wax (with molecular weight of 1000-4000) | 110 | 5 | Polyvinyl chloride (with molecular weight of 5*10⁴-6*10⁴) | 120 | 22 | *4*/*5* | 3/5 | 19.4 |
| Example 1-4 | Polyethylene wax (with molecular weight of *1000-*2000) | 30 | 8.5 | Polyvinyl chloride (with molecular weight of 5*10⁴-6*10⁴) | 120 | 21 | *4*/*5* | *5*/*5* | 23 |
| Example 1-5 | Polyethylene wax (with molecular weight of 1000-3000) | 105 | 6.5 | Polyethylene (with molecular weight of 8000- . 1.2*10⁴) | 130 | 23 | 4/5 | 4/5 | *18.3* |
| Example 1-6 | Polyethylene wax (with molecular weight of 1000-3000) | 105 | 6.5 | Polyethylene (with molecular weight of 6000-8000) | 115 | 20 | *4*/*5* | 5/5 | 22 |
| Example 1-7 | Polyethylene wax (with molecular weight of 1000-3000) | 105 | 6.5 | Polyethylene (with molecular weight of 1.5*10⁴-2*10⁴) | *135* | 21 | 4/5 | 3/5 | 18.1 |
| Example 1-8 | Polyethylene wax (with molecular weight of 1000-3000) | 105 | 6.5 | Polyethylene-polypropylene mixture (9:1) | 140 | 25 | 3/5 | 3/5 | 17.6 |
| Example 1-9 | Polyethylene wax (with molecular weight of 1000-3000) | 105 | 6.5 | Polyethylene (with molecular weight of 4000-6000) | 110 | 24 | 5/5 | 5/5 | 18.8 |
| Example 1-10 | Terpolymer polyacrylonitrile | 80 | 10 | Polyethylene (with molecular weight of 4000-6000) | 115 | 26 | 5/5 | *5*/*5* | 19.0 |
| Example 1-11 | Polystyrene | 95 | 8 | Polyethylene (with molecular weight of 4000-6000) | 117 | 26 | 5/5 | *5*/*5* | 19.6 |
| Example 1-12 | Polyethylene wax (with molecular weight of 4000-6000) | 115 | 1 | Polyethylene (with molecular weight of 1500-3000) | 100 | 24 | 4/5 | 3/5 | 18.5 |
| Example 1-13 | Polymethyl acrylate | 60 | 12 | Polyethylene (with molecular weight of 4000-6000) | 120 | 23 | 5/5 | *5*/*5* | 20 |
| Example 1-14 | Polyethylene wax (with molecular weight of 1000-3000) | 105 | 6.5 | Polyethylene-polypropylene mixture (9:1) | 140 | 30 | 3/5 | 3/5 | 17.3 |
| Example 1-15 | Polyethylene wax (with molecular weight of 1000-3000) | 105 | 6.5 | Polyethylene (with molecular weight of 1500-3000) | 105 | 28 | 4/5 | 3/5 | 22 |

From comparison of Comparative Example 1-1 with Example 1-1, it can be seen that the separator containing the functional particles significantly improves the pass rates of lithium-ion batteries in the hot-box test and the needle penetration test, and the battery cell has an appropriate internal resistance after formation, while the battery cell in Comparative Example 1-1 has an excessively high internal resistance after formation, which is not conducive to normal use of the battery cell.

From comparison of Comparative Examples 1-2 and 1-3 with Example 1-1, it can be seen that the swelling of the functional particles needs to be within an appropriate range. Within the appropriate range, higher swelling more significantly improves thermal safety performance. However, excessively high swelling, such as a mass increase exceeding 30%, severely blocks pores, leading to excessive internal resistance of the battery cell, thus affecting electrical performance of the battery cell. In addition, the swelling of the functional particles should not be excessively low, such as a mass increase below 20%. In this case, the thermal safety performance of the battery cell cannot be improved.

From comparison of Comparative Examples 1-2 to 1-3 with Examples 1-1 to 1-4, it can be seen that an appropriate Tg/melting point of the first component in the core is more conducive to increasing the pass rate of lithium-ion batteries in the thermal safety test, and the internal resistance of the battery cell after formation is more significantly increased within an appropriate range, thereby improving the thermal safety performance.

From comparison of Examples 1-5 to 1-9 and 1-14 with Example 1-15, it can be seen that an appropriate Tg/melting point of the second component in the shell is more conducive to increasing the pass rate of lithium-ion batteries in the thermal safety test.

From comparison of Examples 1-10 to 1-13, it can be seen that an appropriate endothermic power of the first component in the core is also conducive to increasing the pass rate of lithium-ion batteries in the thermal safety test and appropriately increasing the internal resistance of the battery cell after formation.

**Table 3**

| | D₁ (µm) | D₂ (µm) | D₂/D₁ | Melting range of functional particle (°C) | Porosity of base film (%) | Porosity of separator after baked at 115-125°C for 1-2 h (%) | Thermal safety test | | Internal resistance of battery cell after formation |
|---|---|---|---|---|---|---|---|---|---|
| | | | | | | | Pass rate in hot-box test (%) | Pass rate in needle penetration test (%) | Internal resistance (mΩ) |
| Example 2-1 | 2 | 1 | 0.5 | 15 | 36 | 10 | 5/5 | 4/5 | 19.3 |
| Example 2-2 | 0.6 | 0.3 | 0.5 | 15 | 36 | 8 | 5/5 | 5/5 | 19.5 |
| Example 2-3 | 10 | 5 | 0.5 | 15 | 36 | 22 | 4/5 | 4/5 | 18.1 |
| Example 2-4 | 0.4 | 0.2 | 0.5 | 15 | 36 | 7 | 5/5 | 5/5 | 19.9 |
| Example 2-5 | 2 | 0.4 | 0.2 | 15 | 36 | 25 | 3/5 | 3/5 | 17.8 |
| Example 2-6 | 2 | 1.2 | 0.7 | 15 | 36 | 8 | 5/5 | 5/5 | 19.7 |
| Example 2-7 | 2 | 2 | 1 | 15 | 36 | 5 | 5/5 | 4/5 | 20 |
| Example 2-8 | 2 | 1.2 | 0.7 | 15 | 20 | 5 | 5/5 | 4/5 | 22 |
| Example 2-9 | 2 | 1.2 | 0.7 | 10 | 20 | 5 | 4/5 | 4/5 | 22 |
| Example 2-10 | 2 | 1.2 | 0.7 | 10 | 50 | 20 | 4/5 | 5/5 | 18.5 |
| Example 2-11 | 2 | 1.2 | 0.7 | 10 | 25 | 12 | 4/5 | 4/5 | 18.9 |
| Example 2-12 | 2 | 1.2 | 0.7 | 10 | 55 | 20 | 4/5 | 5/5 | 18.6 |
| Example 2-13 | 2 | 1.2 | 0.7 | 10 | 30 | 10 | 5/5 | 5/5 | 20.0 |
| Example 2-14 | 2 | 1.2 | 0.7 | 10 | 60 | 30 | 3/5 | 3/5 | 18.1 |

From Table 3, it can be seen that further adjusting the parameters such as the D50 value and melting range of the functional particles and the porosity of the base film within the appropriate ranges is more conducive to increasing the pass rate of lithium-ion batteries in the thermal safety test.

**Table 4**

| | Organic solvent | Mass percentage of linear carbonate | Mass percentage of cyclic carbonate | Percentage of additive (%) | Mass increase of functional particle after soaked in electrolyte at 80°C for 1 h (%) | Thermal safety test | |
|---|---|---|---|---|---|---|---|
| | | | | | | Cathode heat generation (J) | Pass rate in hot-box test (%) |
| Example 3-1 | DEC:EC:PC:ADN = 3:4:3:0.15 | 15% | 85% | 0.15 | 10 | 318 | 4/5 |
| Example 3-2 | DEC:EC:PC:ADN =4:3:3:0.15 | 40% | 60% | 0.15 | 5 | 305 | 5/5 |
| Example 3-3 | DEC:EC:PC:ADN =1:5:4:0.15 | 10% | 90% | 0.15 | 18 | 335 | 3/5 |
| Example 3-4 | DEC:EC:PC:ADN =1:2:1:0.15 | 25% | 75% | 0.15 | 12 | 304 | 5/5 |
| Example 3-5 | DEC:EC:PC:ADN = 3:4:3:0.49 | 15% | 85% | 0.49 | 15 | 328 | 4/5 |
| Example 3-6 | DEC:EC:PC:ADN = 3:4:3:0.60 | 15% | 85% | 0.60 | 17 | 338 | 3/5 |
| Example 3-7 | DEC:EC:PC:SN = 3:4:3:0.15 | 15% | 85% | 0.15 | 9 | 320 | 5/5 |
| Example 3-8 | DEC:EC:PC:AN = 3:4:3:0.15 | 15% | 85% | 0.15 | 9 | 317 | 4/5 |

From Table 4, it can be seen that combining the functional coating with an appropriate electrolyte not only facilitates the melting and pore-blocking effect of the functional coating, but the melted and flowing coating also covers the surface of the cathode active material. Additionally, the nitrile additive in the electrolyte forms a film on the cathode, enhancing the stability of the cathode at high temperatures, inhibiting side reactions between the cathode and the electrolyte, and reducing heat generation. In Example 3-3, due to the excessively high percentage of cyclic carbonate, the electrolyte viscosity is high, which is not conducive to lithium-ion transmission and leads to high internal resistance of the battery cell.

**Table 5**

| | Open-circuit voltage of lithium-ion battery (V) | Ohmic internal resistance of lithium-ion battery after baked at 120°C for 20 min (mΩ) | Pass rate in hot-box test |
|---|---|---|---|
| Example 4-1 | 3 | 1.2R | 4/5 |
| Example 4-2 | 3.5 | 5.0R | 5/5 |
| Example 4-3 | 3.3 | 2.0R | 4/5 |
| Example 4-4 | 2.5 | 1.0R | 3/5 |
| Example 4-5 | 3.8 | 6.0R | 3/5 |

From Table 5, it can be seen that during melting and pore-blocking, the functional coating covers the surface of the cathode active material, resulting in low capacity of a button battery assembled by the cathode electrode plate disassembled after baked at 115°C to 125°C for 1 h to 2 h.

The above are merely preferred embodiments of this application and are not intended to limit this application. Any modifications, equivalent substitutions, improvements, and the like made within the spirit and principle of this application should be included within the protection scope of this application.

## Claims

1. A separator, wherein the separator comprises a base film and a functional coating disposed on the base film; wherein
the functional coating comprises a first coating, the first coating is disposed on one side surface of the base film, the first coating contains functional particles, and the functional particles are configured to melt and block pores of the base film in a temperature range of 110°C to 130°C;
the functional particles exhibit a mass increase of 20% to 30% after soaked in a specific solution at a temperature of 98°C to 102°C for 1 h; and
the specific solution comprises a solvent and LiPF6, wherein the solvent comprises ethylene carbonate, ethyl methyl carbonate, and diethyl carbonate; a mass ratio of ethylene carbonate, ethyl methyl carbonate, and diethyl carbonate is (0.8 to 1.2):(0.8 to 1.2):(0.8 to 1.2); and a mass percentage of LiPF6 in the specific solution is 12wt% to 13wt%.

2. The separator according to claim 1, wherein the functional particles each have a core-shell structure, and the core-shell structure comprises a core and a shell, and satisfies at least one of the following conditions:
(1) the core contains a first component, and the first component has a glass transition temperature/melting point of 30°C to 110°C;
(2) the first component has an endothermic power of 1 mW/mg to 12 mW/mg; or
(3) the shell contains a second component, and the second component has a glass transition temperature/melting point of 110°C to 130°C.

3. The separator according to claim 1, wherein the functional coating further comprises a second coating, the second coating is a solid filler coating, and the separator satisfies at least one of the following conditions:
(1) a porosity of the base film is 20% to 55%; or
(2) a porosity of the separator after baked at 115°C to 125°C for 1 h to 2 h is 5% to 30%.

4. The separator according to claim 3, wherein the separator satisfies at least one of the following conditions:
(1) the porosity of the base film is 30% to 55%; or
(2) a porosity of the separator after baked at 115°C to 125°C for 1 h to 2 h is 5% to 22%.

5. The separator according to claim 2, wherein the separator satisfies at least one of the following conditions:
(1) a melting range of the functional particles is 5°C to 25°C;
(2) a D50 value of the functional particles is 0.4 µm to 2 µm; or
(3) the D50 value of the functional particles is denoted as D1, and a D50 value of the core is denoted as D2, satisfying: 0.5 ≤ D₂/D₁ ≤ 1.

6. The separator according to claim 1, wherein the separator is configured in an electrochemical apparatus; and in a fully charged state, a DSC spectrum of the separator exhibits a characteristic peak A1 of a core in a range of 95°C to 110°C and a characteristic peak B1 of a shell in a range of 115°C to 135°C.

7. The separator according to claim 6, wherein a peak area of a main melting peak of the characteristic peak A1 is 150 J/g to 200 J/g, and a peak area of a main melting peak of the characteristic peak B1 is 150 J/g to 200 J/g.

8. An electrochemical apparatus, wherein the electrochemical apparatus comprises a separator and an electrolyte; wherein
the separator is the separator according to any one of claims 1 to 7;
the electrolyte comprises an organic solvent and an additive, wherein the organic solvent comprises a linear carbonate and a cyclic carbonate, and the additive comprises a nitrile compound; and
the nitrile compound is selected from at least one of succinonitrile, adiponitrile, glutaronitrile, or acrylonitrile.

9. The electrochemical apparatus according to claim 8, wherein at least one of the following conditions is satisfied:
(1) a mass ratio of the organic solvent to the additive is (3 to 5):(0.1 to 0.2);
(2) based on a mass of the organic solvent, a mass percentage of the linear carbonate is 15wt% to 40wt%, and a mass percentage of the cyclic carbonate is 60wt% to 85wt%; or
(3) based on a mass of the additive, a mass percentage of the nitrile compound is 0.15wt% to 0.5wt%.

10. The electrochemical apparatus according to claim 8, wherein the functional particles exhibit a mass increase of 5% to 15% after soaked in the electrolyte at 75°C to 85°C for 1 h.

11. The electrochemical apparatus according to claim 8, wherein a voltage range of the electrochemical apparatus in a fully discharged state is 3.0 V to 3.5 V; and
an ohmic internal resistance of the electrochemical apparatus is denoted as R, and an ohmic internal resistance after baked at 115°C to 125°C for 20 min to 30 min is (1.2 to 5.0)R.

12. An electronic device, wherein the electronic device comprises the electrochemical apparatus according to any one of claims 8 to 11.
